# EUROPEAN PATENT APPLICATION

(11) **EP 4 806 949 A2**
(43) Date of publication of application: **16.09.2026**
(21) Application number: 26194617.2
(22) Date of filing: 06.06.2025
(51) Int. Cl.: C08J 9/32

(54) **SYNTACTIC-FOAM PARTS AND ASSOCIATED METHODS OF MAKING THE SAME**

(30) Priority: 30.07.2024 US 202418789136
(62) Document number(s) of the earlier application(s) in accordance with Art. 76 EPC: 25181469.5 / 4 686 554
(71) Applicant: The Boeing Company, Arlington, VA 22202 (US)
(72) Inventor: WILENSKI, Mark, Arlington, 22202 (US); TAYLOR, Megan, Arlington, 22202 (US); GREGERSEN, Kimberly-Alice, Arlington, 22202 (US); MCIVER, Carl, Arlington, 22202 (US)
(74) Representative: Boult Wade Tennant LLP

(57) **Abstract**

Disclosed is a syntactic-foam part comprising low-density spheres, at least one inner distribution media layer positioned within the low-density spheres at a predetermined height and defining an infusion interface, and a resin encapsulating the low-density spheres and the at least one inner distribution media layer. The at least one inner distribution media layer comprises at least one lower-resistance flow region. Regions of the least one inner distribution media layer other than the at least one lower-resistance flow region comprise a higher-resistance flow region. The at least one lower-resistance flow region has a lower resistance to a flow of the resin compared to the higher-resistance flow region, such that the resin flows faster through the at least one lower-resistance flow region.

## Description

### FIELD

This disclosure relates generally to buoyancy foams, and more particularly to syntactic buoyancy foams made of low-density spheres embedded in a resin.

### BACKGROUND

Buoyancy foams are incorporated into parts to promote buoyancy of the part within a higher density fluid. Some parts that incorporate buoyancy foams include, but are not limited to, submarines, watercraft, oil drilling rigs and components, marine platforms, and other marine-based systems. Typical buoyancy foams are compression resistant and, in some cases, water resistant, durable, and reliable. Making buoyancy foams that have these characteristics, using an efficient, a cost-effective, and a reliable manufacturing process, can be difficult.

### SUMMARY

The subject matter of the present application has been developed in response to the present state of the art, and in particular, in response to the shortcomings of conventional buoyancy foams and conventional methods of making such buoyancy foams, that have not yet been fully solved by currently available techniques. Accordingly, the subject matter of the present application has been developed to provide syntactic-foam parts and corresponding methods of making such parts that overcome at least some of the shortcomings of prior art techniques.

The following is a non-exhaustive list of examples, which may or may not be claimed, of the subject matter, disclosed herein.

Disclosed herein is a method of making a syntactic-foam part. The method includes loading a first set of low-density spheres into a mold to fill a first section of the mold. The method also includes positioning an inner distribution media layer over the first set of low-density spheres in the first section of the mold, the inner distribution media layer defining an infusion interface within the mold. The method further includes loading a second set of low-density spheres into the mold to fill a second section of the mold. After filling the mold, the method includes, applying vacuum to the mold by opening a primary vacuum port. The method also includes introducing a first portion of resin from the primary resin inlet into the first section of the mold. After the first portion of resin reaches a predetermined level, the method further includes opening a secondary resin inlet to flow a second portion of resin along an entirety of the inner distribution media layer to introduce the second portion of resin from the infusion interface into the second section of the mold. After a predetermined amount of the second portion of resin enters into the primary vacuum port, the method includes closing the primary vacuum port. The preceding subject matter of this paragraph characterizes example 1 of the present disclosure.

The step of applying vacuum to the mold may further include applying vacuum to the mold by opening a secondary vacuum port. The secondary vacuum port may be positioned between the primary vacuum port and the primary resin inlet and is adjacent to the inner distribution media layer. Prior to opening the secondary resin inlet, the method may include closing the secondary vacuum port. The preceding subject matter of this paragraph characterizes example 2 of the present disclosure, wherein example 2 also includes the subject matter according to example 1, above.

After introducing the first portion of resin and the second portion of resin into the mold, the method may include solidifying the first portion of resin and the second portion of resin. The preceding subject matter of this paragraph characterizes example 3 of the present disclosure, wherein example 3 also includes the subject matter according to any of examples 1-2, above.

Prior to loading the low-density spheres into the first section of the mold, the method may include positioning a lower distribution media layer at a bottom of the mold. The lower distribution media layer may define a lower infusion interface and the inner distribution media layer may be positioned above the lower distribution media layer. The preceding subject matter of this paragraph characterizes example 4 of the present disclosure, wherein example 4 also includes the subject matter according to any of examples 1-3, above.

After loading the second set of low-density spheres into the second section of the mold, the method may include positioning an upper distribution media layer over the second set of low-density spheres in the second section of the mold. The upper distribution media layer may define an upper infusion interface and the inner distribution media layer may be positioned below the upper distribution media layer. The preceding subject matter of this paragraph characterizes example 5 of the present disclosure, wherein example 5 also includes the subject matter according to any of examples 1-4, above.

The inner distribution media layer may inhibit movement of low-density spheres through the inner distribution media layer. The preceding subject matter of this paragraph characterizes example 6 of the present disclosure, wherein example 6 also includes the subject matter according to any of examples 1-5, above.

The first portion of resin may be introduced at a bottom of the mold and fills the mold in a generally bottom-to-top direction. The preceding subject matter of this paragraph characterizes example 7 of the present disclosure, wherein example 7 also includes the subject matter according to any of examples 1-6, above.

Each one of the first set of low-density spheres in the first section of the mold and the second set of low-density spheres in the second section of the mold may have a first flow resistance. The inner distribution media layer may have a second flow resistance. The first flow resistance may be greater than the second flow resistance. The preceding subject matter of this paragraph characterizes example 8 of the present disclosure, wherein example 8 also includes the subject matter according to any of examples 1-7, above.

The step of applying vacuum to the mold, by opening the secondary vacuum port, may further include applying vacuum to the mold from multiple secondary vacuum ports each positioned adjacent to the inner distribution media layer at spaced apart locations about the mold, such that each one of the multiple secondary vacuum ports are positioned adjacent to the inner distribution media layer. The preceding subject matter of this paragraph characterizes example 9 of the present disclosure, wherein example 9 also includes the subject matter according to example 2, above.

The method may include actively pushing the first portion of resin, from a bottom of the mold, to urge the first portion of resin to flow in a generally bottom-to-top direction through the mold. The preceding subject matter of this paragraph characterizes example 10 of the present disclosure, wherein example 10 also includes the subject matter according to any of examples 1-9, above.

The inner distribution media layer may include at least one lower-resistance flow region. Regions of the inner distribution media layer, other than the at least one lower-resistance flow region, comprises a higher-resistance flow region. The at least one lower-resistance flow region may have a lower resistance to a flow of resin compared to the higher-resistance flow region, such that the second portion of resin flows faster through the at least one lower-resistance flow region. Opening the secondary resin inlet, to flow the second portion of resin along the entirety of the inner distribution media layer, may comprise flowing the second portion of resin within the at least one lower-resistance flow region and filling in the higher-resistance flow region from the at least one lower-resistance flow region. The preceding subject matter of this paragraph characterizes example 11 of the present disclosure, wherein example 11 also includes the subject matter according to any of examples 1-10, above.

Further disclosed herein is a syntactic-foam part including low-density spheres and at least one inner distribution media layer positioned within the low-density spheres at a predetermined height and defining an infusion interface. A resin encapsulates the low-density spheres and the at least one inner distribution media layer. The at least one inner distribution media layer is configured to facilitate flow of the resin along an entirety of the at least one inner distribution media layer to introduce the resin from the at least one inner distribution media layer, thus resetting a resin level at the infusion interface during an infusion process. The preceding subject matter of this paragraph characterizes example 12 of the present disclosure.

The low-density spheres, encapsulated in the resin, may have a first density and the at least one inner distribution media layer, encapsulated in the resin, may have a second density. The second density may be greater than the first density. The preceding subject matter of this paragraph characterizes example 13 of the present disclosure, wherein example 13 also includes the subject matter according to example 12, above.

The at least one inner distribution media layer may include multiple sub-layers. Each one of the multiple sub-layers may be configured to perform at least one of inhibiting movement of low-density spheres through the at least one inner distribution media layer, allowing resin to flow through the at least one inner distribution media layer, conducting heat, and conducting electrical current. The preceding subject matter of this paragraph characterizes example 14 of the present disclosure, wherein example 14 also includes the subject matter according to any of examples 12-13, above.

The at least one inner distribution media layer may be made of a fibrous material. The preceding subject matter of this paragraph characterizes example 15 of the present disclosure, wherein example 15 also includes the subject matter according to any of examples 12-14, above.

The at least one inner distribution media layer may include at least one lower-resistance flow region and regions of the at least one inner distribution media layer other than the lower-resistance flow region include a higher-resistance flow region. The at least one lower-resistance flow region may have a lower resistance to a flow of the resin compared to the higher-resistance flow region, such that the resin flows faster through the at least one lower-resistance flow region. The preceding subject matter of this paragraph characterizes example 16 of the present disclosure, wherein example 16 also includes the subject matter according to any of examples 12-15, above.

Also disclosed herein is a method of making a syntactic-foam part. The method includes loading low-density spheres and a plurality of inner distribution media layers into a mold. Each one of the plurality of inner distribution media layers is positioned at a predetermined height and defines an infusion interface within the mold. The method also includes applying vacuum to the mold by opening a primary vacuum port and a plurality of secondary vacuum ports. Each one of the plurality of secondary vacuum ports is between the primary vacuum port and a primary resin inlet and is positioned adjacent to one of the plurality of inner distribution media layers. The method further includes introducing resin into the mold from the primary resin inlet. The method additionally includes sequentially closing each one of the plurality of secondary vacuum ports when a predetermined amount of the resin enters into the corresponding one of the plurality of secondary vacuum ports. After a corresponding one of the plurality of secondary vacuum ports is closed, the method includes sequentially opening each one of a plurality of secondary resin inlets to flow a second portion of resin along an entirety of the corresponding one of the plurality of inner distribution media layers to introduce the second portion of resin from the corresponding infusion interface into the mold. The preceding subject matter of this paragraph characterizes example 17 of the present disclosure.

The predetermined height of each one of the plurality of inner distribution media layers may be uniformly positioned within the mold, such that a spacing between adjacent ones of the plurality of inner distribution media layers, a spacing between a bottom of the mold and a first inner distribution media layer, and a spacing between a top of the mold and a topmost inner distribution media layer are the same. The preceding subject matter of this paragraph characterizes example 18 of the present disclosure, wherein example 18 also includes the subject matter according to example 17, above.

The predetermined height of each one of the plurality of inner distribution media layers may be non-uniformly positioned within the mold, such that at least one of a spacing between adjacent ones of the plurality of inner distribution media layers, a spacing between a bottom of the mold and a first inner distribution media layer, and a spacing between a top of the mold and a topmost inner distribution media layer is different. The preceding subject matter of this paragraph characterizes example 19 of the present disclosure, wherein example 19 also includes the subject matter according to example 17, above.

The method may include observing a level of the resin through at least one transparent window in the mold. The step of sequentially closing each one of the plurality of secondary vacuum ports may further include sequentially closing each one of the plurality of secondary vacuum ports when the level of the predetermined level of the resin is observed to be reached. The preceding subject matter of this paragraph characterizes example 20 of the present disclosure, wherein example 20 also includes the subject matter according to any of examples 17-19, above.

A quantity of the plurality of inner distribution media layers may be adjustable based on a desired infusion duration of the resin through the mold. The preceding subject matter of this paragraph characterizes example 21 of the present disclosure, wherein example 21 also includes the subject matter according to any of examples 17-20, above.

The described features, structures, advantages, and/or characteristics of the subject matter of the present disclosure may be combined in any suitable manner in one or more examples. In the following description, numerous specific details are provided to impart a thorough understanding of examples of the subject matter of the present disclosure. One skilled in the relevant art will recognize that the subject matter of the present disclosure may be practiced without one or more of the specific features, details, components, materials, and/or methods of a particular example. In other instances, additional features and advantages may be recognized in some examples that may not be present in all examples. Further, in some instances, well-known structures, materials, or operations are not shown or described in detail to avoid obscuring features of the subject matter of the present disclosure. The features and advantages of the subject matter of the present disclosure will become more fully apparent from the following description and appended claims or may be learned by the practice of the subject matter as set forth hereinafter.

### BRIEF DESCRIPTION OF THE DRAWINGS

In order that the advantages of the subject matter may be more readily understood, a more particular description of the subject matter briefly described above will be rendered by reference to specific examples that are illustrated in the appended drawings. Understanding that these drawings, which are not necessarily drawn to scale, depict only certain examples of the subject matter and are not therefore to be considered to be limiting of its scope, the subject matter will be described and explained with additional specificity and detail through the use of the drawings, in which:
Figure 1A is a schematic perspective view of a syntactic-foam part;
Figure 1B is a schematic top view of one example of an inner distribution media layer;
Figure 1C is a schematic side elevation view of one example of an inner distribution media layer;
Figure 2 is a schematic front elevation view of low-density spheres being loaded into a mold;
Figure 3A is a schematic front elevation view of a mold, prior to resin being introduced into the mold;
Figure 3B is a schematic graphical view illustrating a representative infiltration height verses time of a syntactic-foam part forming process;
Figure 4A is a schematic front elevation view of a resin being introduced into and starting to fill the mold of Figure 3A, the resin layer under a first inner distribution media layer, and one secondary vacuum port for each inner distribution media layer;
Figure 4B is a schematic front elevation view of the mold of Figure 4A, with two secondary vacuum ports for each inner distribution media layer;
Figure 4C is a schematic front elevation view of the mold of Figure 4A, with the secondary vacuum ports for each inner distribution media layer above a corresponding inner distribution media layer;
Figure 5 is a schematic front elevation view of the resin filling the mold of Figure 3A, with the resin layer at a first inner distribution media layer;
Figure 6 is a schematic front elevation view of the resin filling the mold of Figure 3A, with the resin layer at a second inner distribution media layer;
Figure 7 is a schematic front elevation view of the resin filling the mold of Figure 3A, with the resin layer at a top of the mold;
Figure 8 is a schematic perspective view of a mold for forming a syntactic-foam part;
Figure 9 is a schematic flow chart of a method of making a syntactic-foam part; and
Figure 10 is a schematic flow chart of another method of making a syntactic-foam part.

### DETAILED DESCRIPTION

Reference throughout this specification to "one example," "an example," or similar language means that a particular feature, structure, or characteristic described in connection with the example is included in at least one example of the present disclosure. Appearances of the phrases "in one example," "in an example," and similar language throughout this specification may, but do not necessarily, all refer to the same example. Similarly, the use of the term "implementation" means an implementation having a particular feature, structure, or characteristic described in connection with one or more examples of the present disclosure, however, absent an express correlation to indicate otherwise, an implementation may be associated with one or more examples.

Some conventional methods for making syntactic foams include adding low-density spheres in a close-packed condition into a mold to form a bed of spheres and then infusing the mold with a liquid resin, which embeds the spheres. As the resin is infused into the bed of spheres, an infusion rate decreases as a path length through the bed of spheres increases. In other words, the infusion rate decreases as the distance the resin needs to travel through the bed of spheres increases, or as the height of the part increases. Moreover, as a packing density of the bed of spheres increases it becomes more difficult to infuse the bed of spheres with the resin, leading to lower permeability. Commonly, a height of syntactic-foam parts is limited due to the long infusion duration required to embed the bed of spheres. For certain types of low-density spheres, the height of the syntactic-foam part is limited to six inches (15cm). Ultimately, the infusion rate of the resin limits the final height of a syntactic-foam part that can be effectively infused for a given resin viscosity and packing density.

Described herein are examples of a method of making syntactic-foam parts, made of low-density spheres embedded in a resin, that reduces the infusion time required for foam manufacture. The method results in a syntactic-foam part that is formed at a faster infusion rate per unit height compared to conventional syntactic-foam parts, which enables the production of parts with greater heights than those achievable with conventional methods. The method includes positioning at least one distribution media layer within the low-density spheres to increase the infusion rate within the mold. Distribution media layers, together with corresponding resin inlets, and in some example, corresponding vacuum ports, reduce the time required to embed syntactic-foam parts and enable the use of a variety of resins, including those with higher viscosity or higher performance than conventionally used resins.

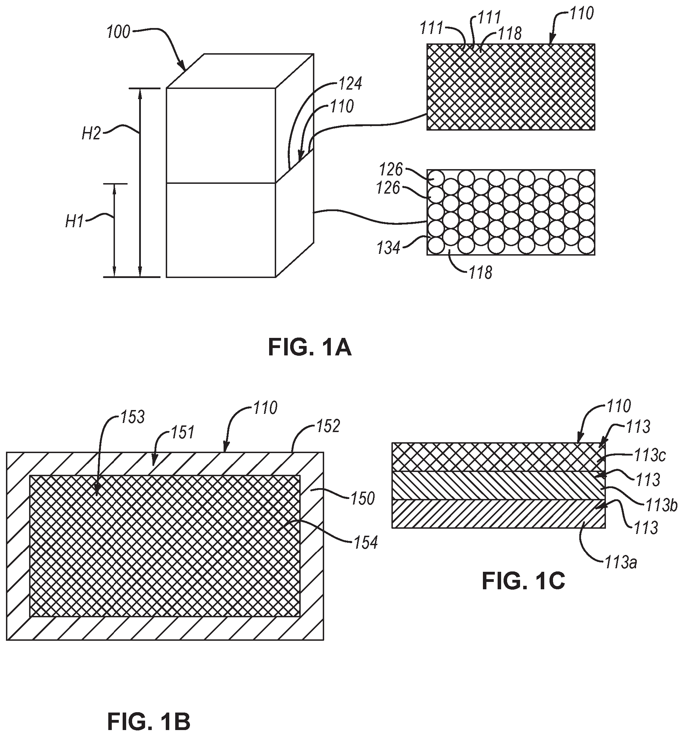

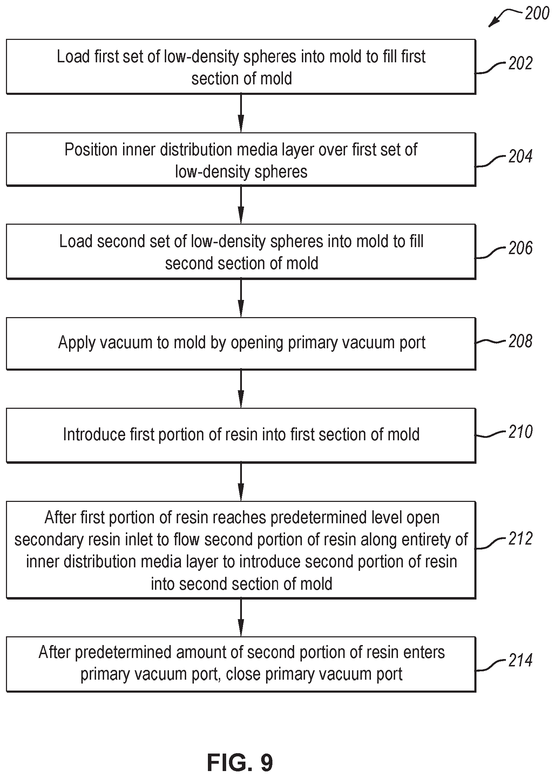

Referring to Figure 1A, a syntactic-foam part 100, formed using a method, such as a method 200 described below in reference to Figure 9, is shown. The syntactic-foam part 100 includes low-density spheres 126 and at least one inner distribution media layer 110 positioned within the low-density spheres 126. A resin 118, which is solidified, encapsulates the low-density spheres 126 and the at least one inner distribution media layer 110. Although shown as a solid block, the syntactic-foam part 100 is composed of low-density spheres 126 packed tightly together, with interstitial spaces 134 between adjacent spheres, that has been filled with the resin 118, as illustrated in a representative block. An inner distribution media layer 110 is positioned within the low-density spheres 126 at a predetermined height *H1*, with the layer illustrated in another representative block. Specifically, the syntactic-foam part 100 has a final height *H2* and includes a first section of low-density spheres 126 and a second section of low-density spheres 126 separated by the inner distribution media layer 110.

The low-density spheres 126, encapsulated in the resin 118, have a first density. In contrast, the at least one inner distribution media layer 110, also encapsulated in the resin 118, has a second density, which is greater than the first density. In other words, the at least one inner distribution media layer 110 is denser than the low-density spheres 126 as it must have free volume to allow resin flow. However, the at least one inner distribution media layer 110 can be designed to strike a balance between density and resin flow, optimizing the material to be dense enough to facilitate efficient resin distribution while minimizing the overall weight of the syntactic-foam part 100.

The at least one inner distribution media layer 110 is positioned at a strategic height (i.e., predetermined height) within the low-density spheres 126 to increase the infusion rate at the level of the inner distribution media layer 110. That is, the inner distribution media layer 110 is utilized to reset a path length of the resin 118 (i.e., resin level) to the level of the inner distribution media layer 110. This allows the infusion rate to increase at each inner distribution media layer and then gradually decrease as the resin 118 continues to infuse through the low-density spheres 126. Accordingly, the number of inner distribution media layers 110 within the syntactic-foam part 100 may depend on the final height *H2* of the syntactic-foam part 100. In some examples, the syntactic-foam part 100 includes one inner distribution media layer 110, as illustrated in Figure 1A. In other examples, the syntactic-foam part 100 includes at least two inner distribution media layers 110. In yet other examples, the syntactic-foam part 100 may include any number of inner distribution media layers 110 necessary to efficiently infuse the resin through a mold during the infusion process. Moreover, the at least one inner distribution media layer is configured to facilitate flow of the resin 118 along an entirety of the at least one inner distribution media layer, thus resetting the resin level at the infusion interface during the infusion process. In some examples, the resin 118 flows or substantially flows along an entirety of the at least one inner distribution media layer 110 before flowing out of the at least one inner distribution media layer 110. In other words, the resin 118 flows more rapidly along the at least one inner distribution media layer 110 than through the surrounding spheres, such that it preferentially flows along the inner distribution media layer 110.

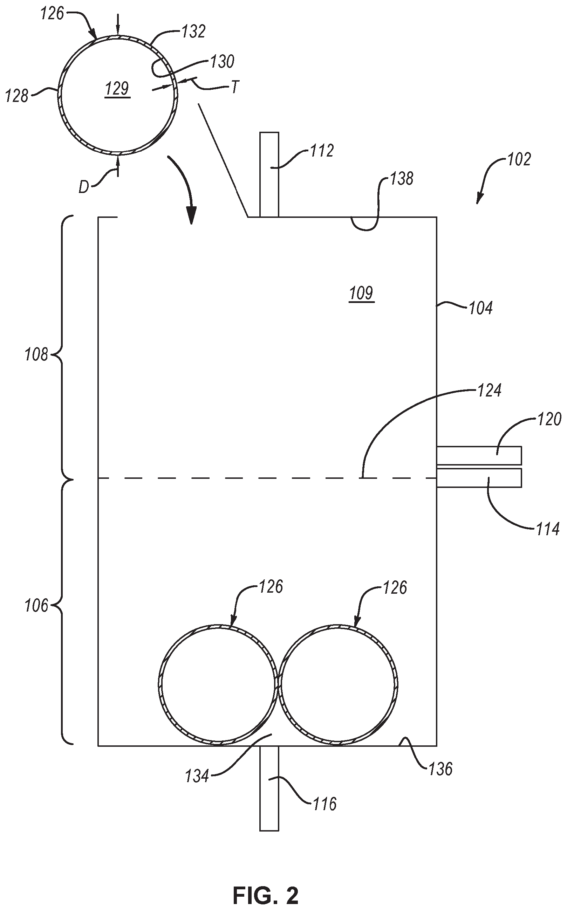

The inner distribution media layer 110 is comprised of a material characterized by a high free volume having open spaces within its structure, allowing the inner distribution media layer 110 to be porous to the resin 118. The inner distribution media layer 110 facilitates the flow of resin through the material, as the high free volume provides pathways for the resin 118 to travel. Consequently, the resin 118 can flow at a faster rate through the inner distribution media layer 110 compared to the flow through the low-density spheres 126, which are tightly packed. In other words, the low-density spheres 126 have a first flow resistance and the inner distribution media layer 110 has a second flow resistance. The first flow resistance is greater than the second flow resistance, such that the resin travels through the low-density spheres 126 at a slower rate than through the inner distribution media layer 110. To ensure compatibility with the resin 118 used in the syntactic-foam part 100, the material of the inner distribution media layer 110 is low in density and also capable of withstanding the resin injection process without losing functionality, thus enabling the resin 118 to flow through the material. This includes resistance to rapid dissolution or clogging. Although, in certain examples, the material may be configured to gradually dissolve due to high temperatures or during the injection process. Dissolution, in some examples, can cause the inner distribution media layer 110 to partially compact thereby improve the packing density of the low-density spheres 126 and enhance the final sphere content and foam density of the syntactic-foam part 100. Moreover, the material of the inner distribution media layer 110 prevents infiltration by the low-density spheres 126 during the infusion process, as pores within the inner distribution media layer 110 are sized to block the low-density spheres 126 from penetration. Accordingly, the inner distribution media layer 110 inhibits (i.e., prevents) the movement of the low-density spheres 126, such that the first set of low-density spheres 126 remain in the first section 106 of the mold 104 (see, e.g., Figure 2).

In certain examples, the inner distribution media layer 110 may be made of a fibrous material, including a plurality of fibers 111. The inner distribution media layer 110 can be made from any of various fibrous materials such as carbon fibers, aramid fibers, or thermoplastic fibers, including PES, PEI, PEEK, and other high-performance thermoplastics. The plurality of fibers 111 of the fibrous material may be woven or non-woven, such as unidirectional fibers or randomly oriented fibers, to form a layer that provides high free volume. Accordingly, the inner distribution media layer 110 can take various forms such as non-woven fabrics, woven fabrics, felts, continuous fibers, yarns, tows, or chopped fibers. The fibrous nature of the material ensures that the inner distribution media layer 110 maintains structural integrity while offering the necessary pathways for the resin 118 to travel through. Alternatively, the inner distribution media layer 110 may be comprised of a non-fibrous material, such as expanded metal foils having a mesh-like pattern providing high free volume. The material of the inner distribution media layer 110 can, in some examples, be a thermally conductive material, such as metal foils or thermally conductive fiber, to help resolve issues associated with heating the mold 104 to cure the resin 118 and mitigate exotherm by the resin 118 as it cures. Additionally, or alternatively, the material can be electrically conductive, such as conductive fibers or coatings, to enable electrical current flow.

The inner distribution media layer 110 can have various shapes, including planar, wavy, or corrugated forms. Additionally, the inner distribution media layer 110 can be a continuous sheet that is sized to extend across an entirety of a length and a width of the mold 104 at the predetermined height *H1.* Furthermore, the inner distribution media layer 110 can be a non-continuous sheet, such as an assembly of strips that connect near a resin inlet. Additionally, in certain examples, the inner distribution media layer 110 may be perforated, such as having a series of holes or perforations throughout the layer, allowing the resin 118 to pass through the perforations while maintaining the structural integrity of the layer. For example, the inner distribution media layer 110 may be a perforated metal sheet or foil, which can be formed via a stamping process in some examples. The inner distribution media layer 110 may be designed to sufficiently direct resin flow while minimizing the layer material to reduce the density of the layer.

As shown in Figure 1B, in some examples, the inner distribution media layer 110 includes at least one lower-resistance flow region 151, which has a lower resistance to the flow of resin compared to other regions of the inner distribution media layer 110, referred to as a higher-resistance flow region 153. The at least one lower-resistance flow region 151 allows an engineered distribution of the flow of resin to create a desired delivery of the resin 118 across the inner distribution media layer 110, such that the resin 118 flows faster through the at least one lower-resistance flow region 151 than the higher-resistance flow regions 153. For example, the at least one lower-resistance flow region 151 may include channels, perforations, or an area with a different material composition that provides lower resistance to resin flow. The at least one lower-resistance flow region 151 may be located around a perimeter or throughout the inner distribution media layer 110 to optimize the resin flow and ensure resin distribution across the inner distribution media layer 110. In one example, the inner distribution media layer 110 includes a flow path portion 150, which is a lower-resistance flow region 151 surrounding a perimeter 152 of the inner distribution media layer 110, and a central portion 154, interior of the flow path portion 150, which is a higher-resistance flow region 153. As the flow path portion 150 has a lower resistance to the flow of resin than the central portion 154, the resin flows at a faster rate through the flow path portion 150, filling the perimeter 152 of the inner distribution media layer 110 before spreading into the central portion 154.

In some examples, the inner distribution media layer 110 is comprised of a single layer. Referring to Figure 1C, in other examples, the inner distribution media layer 110 may have multiple sub-layers 113, where each one of the multiple sub-layers 113 is configured to perform at least one function of the inner distribution media layer 110. For example, the multiple sub-layers 113 may inhibit the movement of low-density spheres 126 through the inner distribution media layer 110, allow resin to flow through, conduct heat, conduct electrical current, provide structural support, or other functions of the inner distribution media layer 110. As shown, the inner distribution media layer 110 includes three sub-layers: a first sub-layer 113a, a second sub-layer 113b, and a third sub-layer 113c. However, the inner distribution media layer 110 may include more or fewer than the three sub-layers 113 shown. Each one of the multiple sub-layers 113 may be configured to perform the same function, such as all the sub-layers having the same material configuration. Alternatively, at least one of the sub-layers may be configured to perform a different function than other sub-layers. In certain examples, some portions of the inner distribution media layer 110 may have more sub-layers 113 than other portions of the inner distribution media layer 110. The number of sub-layers 113 can be used to control the rate of resin flow in certain portions of the inner distribution media layer 110. For example, referring to Figure 1B, the flow path portion 150 may have one or more additional layers than the central portion 154, making the flow path portion 150 thicker and thus capable of flowing resin faster throughout the flow path portion 150.

According to some examples, a method 200 of making a syntactic-foam part, such as the syntactic-foam part of Figure 1A, is shown in Figure 9. Referring generally to Figure 9 and specifically to Figure 2, the method 200 includes (block 202) loading a first set of low-density spheres 126 into a mold 104 to fill a first section 106 of the mold 104. In some examples, the mold 104 includes a selectively openable lid that selectively covers an opening in the mold 104 through which the low-density spheres 126, and the inner distribution media layers 110, can be loaded into the mold 104. The low-density spheres 126 are loaded so that that the low-density spheres 126 are in a close-packed condition or a generally close-packed condition. That is, the low-density spheres 126 are arranged densely together to minimize the spaces between spheres. Accordingly, low-density spheres 126 are in contact with each other, forming a stable structure with minimal interstitial space between adjacent low-density spheres. Interstitial spaces 134 are defined between one of the low-density spheres 126 and at least one of: (1) a second low-density sphere 126; and (2) an inner perimeter of the mold 102. However, in some examples, the interstitial space 134 between adjacent spheres does not need to be uniform. Although the illustrations show the low-density spheres 126 in 2-dimensional space, as can be recognized, when considered in 3-dimensional space, the low-density spheres 126 would be arranged with low-density spheres 126 extending into the page and/or out of the page. Accordingly, in 3-dimensional space, the interstitial space 134 between adjacent ones of the low-density spheres 126 would be defined by multiple low-density spheres 126, not just the two low-density spheres shown. According to some examples using spheres of a single size distribution, the low-density spheres 126 is at most 74% packed within the mold 104, such as at most 69% packed in one example, and at most 50% packed in another example.

The method 200 also includes (block 204) positioning an inner distribution media layer 110 over the first set of the low-density spheres 126 in the first section 106 of the mold 104. Although only shown with two low-density spheres 126 within the mold 104, the first section 106 of the mold 104 would be entirely filled before the inner distribution media layer 110 is positioned within the mold 104, such that the inner distribution media layer 110 is supported by the low-density spheres 126. The inner distribution media layer 110 defines an infusion interface 124 within the mold 104. The infusion interface 124 specifies a level within the mold 104 where additional resin, such as a second portion of resin is introduced into the mold 104. Additionally, the inner distribution media layer 110 separates the first section 106 of the mold 104 from a second section 108 of the mold. In other words, the inner distribution media layer 110 divides the first set of low-density spheres 126 within the first section 106 and a second set of low-density spheres 126 within the second section 108.

The method 200 further includes (block 206) loading the second set of low-density spheres 126 into the mold 104 to fill the second section 108 of the mold 104. The second set of low-density spheres 126 are not shown but are loaded above the inner distribution media layer 110, such that the inner distribution media layer 110 supports the second set of low-density spheres 126. The second set of low-density spheres 126 are loaded in a close-packed condition. In some examples, the low-density spheres 126 in the first section 106 and second section 108 of the mold 104 have the same packing density. In other examples, low-density spheres 126 in the first section 106 and the second section 108 of the mold 104 may have different packing densities.

The size and shape of the interior cavity 109 of the mold 104, including the first section 106 and the second section 108 of the mold 104, determines the size and shape of the syntactic-foam part 100 (*see,* i.e., Figure 1). Additionally, in certain examples, the size and shape of the interior cavity 109 may be configured to ensure a specific arrangement and/or number of low-density spheres 126 are loaded into the mold 104. Therefore, the size and shape of the interior cavity 109 can be dependent on the size of the low-density spheres 126, or vice versa. It is noted that the low-density spheres 126 and the mold 104 are not necessarily to scale. For example, in the illustrated renderings, the size of the low-density spheres 126 is abnormally large relative to the size of the mold 104 for better clarity in showing and describing examples. In practice, the size of the low-density spheres 126 will be much smaller relative to the size of the mold 104 than as depicted. In some examples, the maximum diameter *D* of the low-density spheres 126 is between, and inclusive of, 5 microns and 153 millimeters (mm), such as between, and inclusive of 20 microns to 10,000 microns in one example, and between, and inclusive of 25 microns to 5,000 microns in another example, such as between, and inclusive of, 250 microns and 35,000 in another example, and between, and inclusive of, 500 microns and 1,000 microns in yet another example. In some examples, all the low-density spheres 126 loaded into the mold 104 have the same size. However, in other examples, the low-density spheres 126 loaded into the mold 104 can have different sizes and can be loaded into the mold 104 at separate times corresponding to their sizes.

According to some examples, each one or at least one of the low-density spheres 126 is a hollow sphere 128. The hollow sphere 128 has a hollow interior space 129 defined by an interior surface 130 of a sidewall that also defines an exterior surface 132 of the low-density sphere 126. The hollow sphere 128 has a thin-walled construction. In other words, a thickness *T* of the sidewall is smaller than a radius of the low-density sphere 126. In some examples, a ratio of the thickness *T* to the diameter *D* is between, and inclusive of, 0.001 and 0.1, such as between, and inclusive of, 0.01 and 0.1 in one example, and between, and inclusive of 0.02 and 0.08 in another example. The hollow sphere 128 can be made of any of various materials, such as, but not limited to, glass, ceramic, polymer, metal, and/or the like.

In alternative examples, not shown, each one or at least one of the low-density spheres 126 is a non-hollow foam sphere. In such examples, the non-hollow foam sphere does not have a single hollow space, such as with the hollow sphere 128. Rather, the non-hollow foam sphere is made of a solid piece of foam, which has multiple hollow spaces in the form of multiple open or closed cells. In some examples, the foam of the non-hollow foam sphere is one or more of polystyrene foam, expanded polystyrene (EPS) foam, expanded polypropylene (EPP) foam, polyethylene foam, polyurethane foam, and/or any of various other types of foam. As used herein, in certain examples, a low-density sphere 126 is a hollow or non-hollow sphere having a density of between, and inclusive of, 0.005 g/cm³ and 0.6 g/cm³, such as between, and inclusive of, 0.05 g/cm³ and 0.4 g/cm³ in one example, and between, and inclusive of, 0.1 g/cm³ and 0.3 g/cm³ in another example, and between, and inclusive of, 0.02 g/cm³ and 0.15 g/cm³ in yet another example, and between, and inclusive of 0.015 g/cm³ and 0.03 g/cm³ in a further example.

Although not shown, in some examples, the low-density spheres 126 can be pre-coated with a uniform coating before being loaded into the smaller mold. The uniform coating has a constant (i.e., non-variable) thickness across the sphere. The uniform coating can be made of any of various materials, such as, but not limited to, a pre-ceramic material, polymer, ceramic, and/or the like. In some cases, such as when the low-density sphere 126 is a non-hollow foam sphere, the uniform coating can provide strength and/or an increased thermal stability to the underlying sphere.

In some examples, the low-density spheres 126, when introduced into the interior cavity 109 of the mold 104, occupy at least 50% of the total volume of the interior cavity 109. In some examples, the low-density spheres 126 occupy not less than 50% and not greater than 99% of the total volume of the interior cavity 109.

The mold 104 forms part of a molding tool 102, which further includes a primary resin inlet 116 and a primary vacuum port 112. The primary resin inlet 116 is operable to introduce a resin into an interior cavity 109 of the mold 104. Specifically, the primary resin inlet 116 is operable to introduce the resin from a resin source (not shown) into the first section 106 of the mold 104. The primary resin inlet 116 may include a valve that is selectively operable to regulate the flow of the resin into the interior cavity 109. In the illustrated examples, the primary resin inlet 116 is located at a bottom of the mold 104. In other examples, the primary resin inlet 116 can be located in other locations on the mold 104, adjacent to the first section 106 of the mold 104.

The primary vacuum port 112 is operable to apply a vacuum to the interior cavity 109 of the mold 104. Specifically, the primary vacuum port 112 is connected to a vacuum source (not shown) and is operable to evacuate air and gases from the interior cavity 109, creating a vacuum environment. The vacuum environment helps to infuse the resin through the low-density spheres 126 by removing air pockets and reducing the risks of voids in a final syntactic-foam part. The primary vacuum port 112 may include a valve that is selectively operable to regulate the vacuum pressure applied to the interior cavity 109. In the illustrated examples, the primary vacuum port 112 is located at a top of the mold 104. However, in other examples, the primary vacuum port 112 can be positioned in different locations on the mold 104 to optimize the infusion process based on the specific design and requirements of the molding tool 102. In certain examples, the primary resin inlet 116 and the primary vacuum port 112 are positioned at opposite ends of the mold 104 to help with efficient resin flow and uniform distribution of resin throughout the mold 104. This arrangement helps to create a consistent vacuum pull, drawing the resin evenly across the low-density spheres 126.

The molding tool 102 further includes at least one secondary resin inlet 120 corresponding to each inner distribution media layer 110. The at least one secondary resin inlet 120 is positioned at a location on the molding tool 102 between the primary resin inlet 116 and the primary vacuum port 112 and is operable to introduce a second portion of resin into the mold 104. The at least one secondary resin inlet 120 is positioned adjacent to the inner distribution media layer 110. As used herein adjacent refers to a position that is either aligned with or slightly above or below the inner distribution media layer 110. In other words, the at least one secondary resin inlet 120 is positioned at a height corresponding to the inner distribution media layer 110, along a side of the molding tool 102. Specifically, the secondary resin inlet 120 is operable to introduce the resin from a resin source (not shown) at an infusion interface 124. The infusion interface 124 defines the location where the resin is introduced into the inner distribution media layer 110 and can be planar or non-planar depending on the configuration of the inner distribution media layer 110. The secondary resin inlet 120 may include a valve to regulate the flow of the additional resin during the infusion process.

In some examples, the molding tool 102 further includes at least one secondary vacuum port 114 corresponding to each inner distribution media layer 110. The at least one secondary vacuum port 114 is positioned at a location on the molding tool 102 between the primary resin inlet 116 and the primary vacuum port 112 and is operable to apply a secondary vacuum to the molding tool 102. That is, the secondary vacuum port 114 is operable to apply a vacuum to the mold 104 from a location adjacent to the corresponding one of the inner distribution media layers 110. In other words, the secondary vacuum port 114 is positioned at a height corresponding to the inner distribution media layer 110, along a side of the molding tool 102. The secondary vacuum port 114 aids in the infusion of resin through the mold 104. The secondary vacuum port 114 may also include a valve to selectively regulate vacuum pressure.

The method 200 further includes (block 208) applying vacuum to the mold 104 by opening the primary vacuum port 112. After applying the vacuum to the mold 104, the method 200 includes (block 210) introducing a first portion of resin into the first section 106 of the mold 104, via the primary resin inlet 116. In some examples, where the mold only includes a primary vacuum port 112, the vacuum is applied solely to the mold 104 using the primary vacuum port 112. In other examples, the vacuum is applied to the mold 104 by the primary vacuum port 112 and the at least one secondary vacuum port 114. In these examples, the primary vacuum port 112 and the secondary vacuum port 114 work together to facilitate the infusion of the first portion of resin through the mold 104, filling the first section 106 and encapsulating the first set of low-density spheres 126. Since the secondary vacuum port 114 is nearest to the primary resin inlet 116, the first portion of resin will reach the secondary vacuum port 114 after a certain time interval and begin to be drawn into the secondary vacuum port 114.

Once the first portion of resin reaches a predetermined level, the method 200 includes (block 212) opening the secondary resin inlet 120 to flow a second portion of resin along an entirety of the inner distribution media layer 110 to introduce the second portion of resin from the infusion interface 124 into the second section 108 of the mold 104. Accordingly, the second portion of resin resets the path length of the resin at the infusion interface 124, such that the infusion rate is increased at the infusion interface 124. In some examples, the first portion of resin and the second portion of resin are introduced into the mold 104 from the same resin source. In other examples, the first portion of resin and the second portion of resin are introduced from different resin sources. For example, the source of the second portion of resin may include a more recently mixed resin than the first portion of resin, resulting in a lower viscosity of the second portion of resin, as resin becomes more viscous as it rests. In yet other examples, the first portion of resin and the second portion of resin may be distinct resins having varying properties, such as different curing times or viscosities.

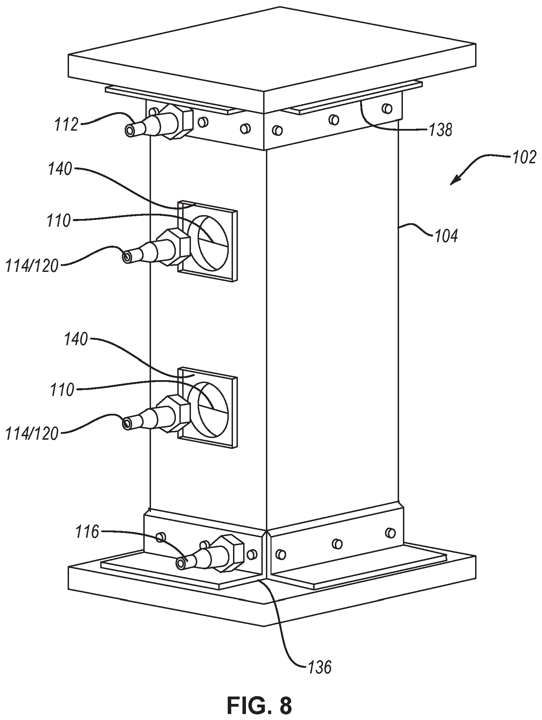

The secondary resin inlet 120 is opened when the first portion of resin reaches the predetermined level. The predetermined level is set at a level to ensure that the resin has adequately filled the corresponding section of the mold 104. In certain examples, where the molding tool 102 includes a secondary vacuum port 114 corresponding to each one of the inner distribution media layers 110, the predetermined level is reached when a predetermined amount of resin enters into the secondary vacuum port 114 representing that the first section 106 of the mold 104 is entirely infused with resin. The secondary vacuum port 114 is then closed, prior to opening the secondary resin inlet 120 in block 212. In other examples, the predetermined level is reached when the resin level is visually observed to be at the predetermined level, such as through a transparent window (see, e.g., Figure 8). In yet other examples, the predetermined level is reached when a predetermined time has passed. That is, the predetermined level of the resin is time-based. The secondary resin inlet 120 may be automatically or manually opened when the predetermined level is reached.

The primary vacuum port 112 facilitates the infusion of the second portion of resin through the remainder of the mold 104, filling the second section 108 and encapsulating the second set of low-density spheres 126. After a predetermined amount of the second portion of resin enters into the primary vacuum port 112, the method 200 further includes (block 214), closing the primary vacuum port 112. The predetermined amount of resin entering into the primary vacuum port 112 ensures that the second section 108 of the mold 104 is entirely infused with resin before the primary vacuum port 112 is closed off. The first portion of resin and the second portion of resin are then solidified to form the syntactic-foam part 100. Solidifying the resin 118 includes changing the state of the resin 118 from one state to a harder state (e.g., from a flowable or semi-flowable state to a non-flowable state), such changing the resin 118 from a fluid to a solid. According to one example, solidifying the resin 118 includes partially or fully curing or drying the resin 118. Fully curing the resin 118 can include raising the temperature of the resin 118 to a cure temperature of the resin 118. In alternative examples, the resin 118 is partially or fully cured via alternative methods, such as radiation processing (e.g., ultraviolet radiation processing, electron beam processing, x-ray processing, etc.) of the resin 118. In some examples, the resin 118 is curing at the infusion temperature. As the resin solidifies, the viscosity increases, such that there is a finite amount of time available for infusion of the resin 118 through the mold 104.

In some examples, and without limitation, the solidification temperature of the resin 118 is between, and inclusive of, 21°C (i.e., room temperature) and 232°C, such as between, and inclusive of, 21°C and 180°C, in one particular example, between, and inclusive of, 21°C and 125°C, in another particular example, and between, and inclusive of, 21°C and 65°C, in yet another particular example. The resin 118 is held at the solidification temperature for a predetermined period of time (and/or the resin 118 can undergo multiple identical or different cure cycles associated with specific temperatures and ramp rates) to effectuate the solidification of the resin 118.

According to some examples, after the resin 118 is solidified, the low-density spheres 126, the at least one inner distribution media layer 110, and the resin 118 form the syntactic-foam part 100. The method 200 can further include removing the syntactic-foam part 100 from the mold 104. After being removed from the mold 104, the syntactic-foam part 100, can form a stand-alone part or be combined with one or more other parts or components to form a larger or more complex part.

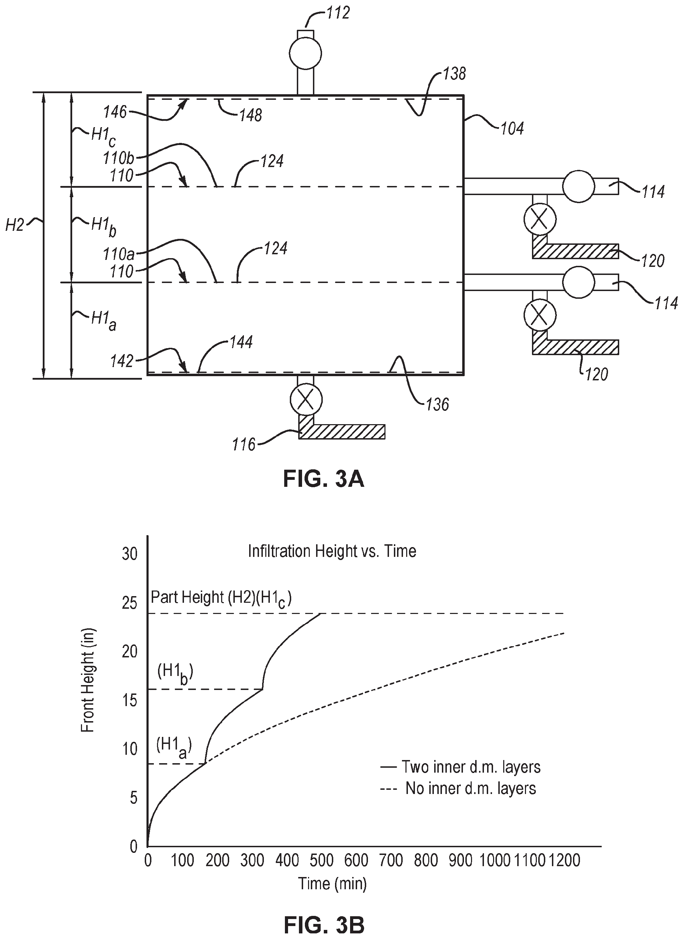

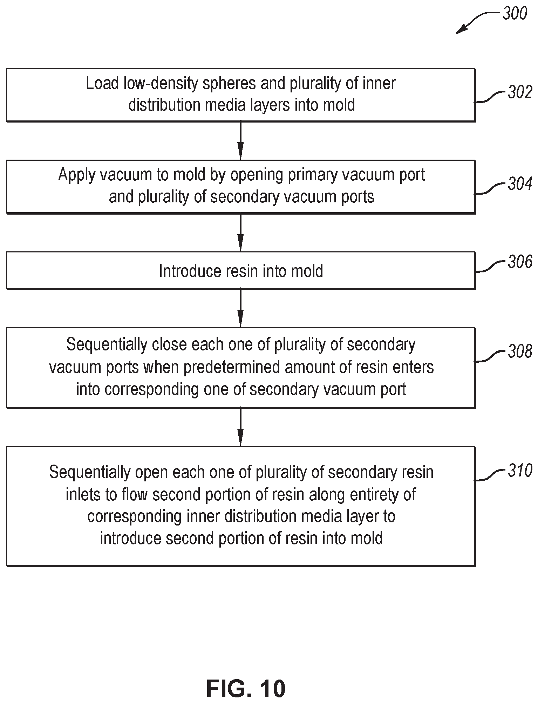

Referring generally to Figure 10, and specifically to Figures 3- 7, according to some examples, is another example of a method 300 of making the syntactic-foam part 100. More specifically, the method 300 includes (block 302) loading low density spheres 126 and a plurality of inner distribution media layers 110 in a mold 104. Referring to Figure 3A, the mold is filled with low-density spheres 126 (not shown) and includes a first inner distribution media layer 110a at a first predetermined height *H1ₐ*, and a second inner distribution media layer 110b, at a second predetermined height *H1_{b}*, each with a corresponding one of a secondary resin inlet 120 and a secondary vacuum port 114 adjacent to the layer.

In some examples, prior to loading the low-density spheres 126 into the mold 104, a lower distribution media layer 142 can be positioned at a bottom 136 of the mold 104, such that the lower distribution media layer 142 is the lowermost distribution media layer in the mold 104. The lower distribution media layer 142 defines a lower infusion interface 144. Similar to the inner distribution media layers 110, the lower distribution media layer 142 is composed of a high free volume material, which allows for resin flow throughout the entirety of the lower distribution media layer 142 as the resin is introduced from the primary resin inlet 116. In other words, the lower distribution media layer 142 functions to facilitate the initial infusion of resin into the mold 104 uniformly from the lower infusion interface 144. In some examples, the lower distribution media layer 142 and the inner distribution media layers 110 are composed of the same material composition. In other examples, the lower distribution media layer 142 may have a different material composition than the inner distribution media layers 110. For example, the lower distribution media layer 142 may have a material or coating such that the lower distribution media layer 142 does not permanently bond to the resin, allowing the lower distribution media layer 142 to be removed from the syntactic-foam part 100 prior to use.

Additionally, or alternatively, in some examples, after filling the mold 104 with low-density spheres 126, an upper distribution media layer 146 can be positioned at a top 138 of the mold 104, or a third predetermined height *H1_{c}*, such that the upper distribution media layer 146 is the uppermost distribution media layer in the mold 104. The upper distribution media layer 146 defines an upper infusion interface 148. Similar to other distribution media layers within the mold 104, the upper distribution media layer 146 is composed of a high free volume material, which allows resin to flow through efficiently. Additionally, the upper distribution media layer 146 aids in maintaining a uniform vacuum, ensuring that the vacuum is evenly distributed across the entirety of the upper infusion interface 148. This uniform vacuum distribution helps to infuse the resin throughout the entirety of the mold 104. Like the lower distribution media layer 142, the upper distribution media layer 146 may have a material or coating that allows for removal of the layer from the syntactic-foam part 100 prior to use and may be made from the same of different material composition.

As shown generally in Figure 10 and specifically in Figure 3A, the method 300 further includes (block 304) applying a vacuum by opening a primary vacuum port 112 and, in some examples, a plurality of secondary vacuum ports 114. Each one of the plurality of secondary vacuum ports 114 is below the primary vacuum port 112 and is positioned adjacent to one of the plurality of inner distribution media layers 110. Accordingly, in molds having a plurality of secondary vacuum ports 114, all vacuum ports on the mold 104 are open and applying a vacuum before resin is introduced to the mold 104.

As shown in Figure 3B is a graph illustrating a representative infiltration height of the syntactic-foam part 100 verses time of infusion using the mold 104 in Figure 3A. The graph illustrates two different infusion rates: a solid line representing the use of two inner distribution media layers 110 and corresponding secondary resin inlets and secondary vacuum ports, as in Figure 3A, and a dashed line representing the use of no inner distribution media layers 110, as seen in existing methods. The starting point of the infusion process in Figure 3A corresponds to the origin (0,0) on the chart. As shown, the infusion rate represented by the solid line significantly enhances the infiltration height over time. Specifically, the inner distribution media layers 110 creates lower-resistance flow regions that allow the resin to flow more quickly, resulting in a periodic increases of infusion rate corresponding to each inner distribution media layer. In contrast, the existing approach demonstrates a slower infusion rate that steadily decreases over time and fails to reach the part height shown within the timeframe of the chart. Accordingly, the inner distribution media layers of Figure 3A accelerate the infusion process, achieving greater infiltration heights in shorter times than existing methods.

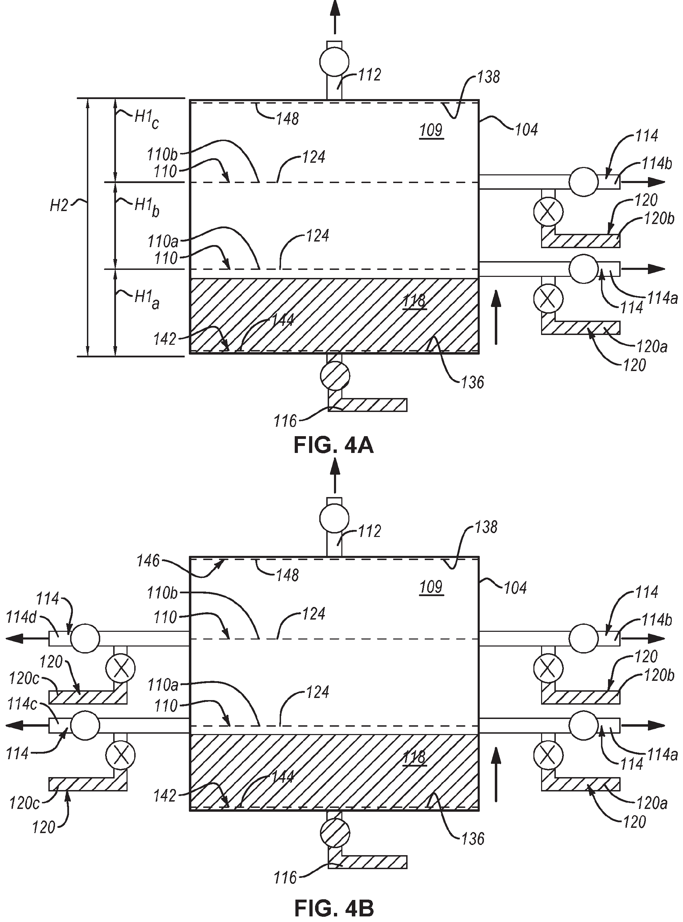

As shown generally in Figure 10 and specifically in Figure 4A, the method 300 includes (block 306) introducing resin 118 into the mold 104. Accordingly, a first portion of resin 118 has been introduced to the mold 104 so that the resin 118 begins to fill the first section of the mold 104 (i.e., area below the first inner distribution media layer 110a) and the interstitial spaces 134 between the low-density spheres 126. As the mold 104 includes the lower distribution media layer 142, the resin 118 is flowed throughout the layer such that the resin 118 is infused from the lower infusion interface 144. All vacuum ports are open when the resin 118 is first introduced into the mold 104 to actively pull, via negative pressure, the resin 118 through the mold 104. In one example, the resin 118 is introduced into the mold 104 through the primary resin inlet 116 at the bottom 136 of the mold 104 and flows through the mold 104 in a bottom-to-top or generally bottom-to-top direction (i.e., a direction parallel or generally parallel to the directional arrow) from the bottom 136 of the mold 104 to the top 138 of the mold 104. In other examples, the resin 118 may be introduced into the mold 104 through a primary resin inlet located at the top of the mold 104 and passively gravity-fed through the mold 104 in a top-to-bottom or generally top-to-bottom direction, such that a top section of the mold is filled before any underneath sections of the mold. In some examples, the resin 118 is pumped (i.e., actively pushed) through the primary resin inlet 116 and into the mold 104 via a pump (not shown), in addition to being actively pulled via the vacuum ports.

The resin 118 can be any of various types of resin conducive to encapsulating and immobilizing the low-density spheres 126. According to some examples, the resin 118 is one or more of a pure resin material (e.g., epoxy resin), a pre-ceramic resin (e.g., silane pre-ceramic resin), a resin matrix composite material (i.e., reinforcement materials embedded in a matrix material), a high-modulus polymer (e.g., highly cross-linked stiff-chain polymer, nano-particle loaded polymer, colloidal silica nanoparticle loaded resin), and the like. The reinforcement materials of the resin matrix composite material can be any of various materials, such as fumed silica, nanoparticles, milled carbon fibers, and/or the like. According to some examples, the resin 118 includes density-reducing components, such as smaller low-density spheres (e.g., glass spheres), which helps to reduce the density of the resin 118 without compromising the strength of the resin 118.

As shown in Figure 4B, in some examples, a plurality of secondary resin inlets 120 correspond to each inner distribution media layer 110. Additionally, in some examples, a plurality of secondary vacuum ports 114 also correspond to each one of the plurality of secondary resin inlets 120 of the corresponding inner distribution media layer 110. For example, the first inner distribution media layer 110a has two resin inlets, including the first secondary resin inlet 120a and the third secondary resin inlet 120c, and two corresponding vacuum ports, including the first secondary vacuum port 114a and a third secondary vacuum port 114c, and the second inner distribution media layer 110b has two resin inlets, including the second secondary resin inlet 120b and the fourth secondary resin inlet 120d and two corresponding vacuum ports, including the second secondary vacuum port 114b and a fourth secondary vacuum port 114d. The placement of the plurality of secondary resin inlets 120 and the plurality of secondary vacuum ports, at spaced apart locations about the mold 104, adjacent to each inner distribution media layer 110, aids in more efficient resin flow and uniform resin distribution through the corresponding inner distribution media layer 110. The addition of multiple secondary resin inlets 120 and secondary vacuum ports 114 per inner distribution media layer may enhance the infusion process for larger syntactic-foam parts 100, allowing for better control over resin flow and vacuum application at various locations of the mold 104.

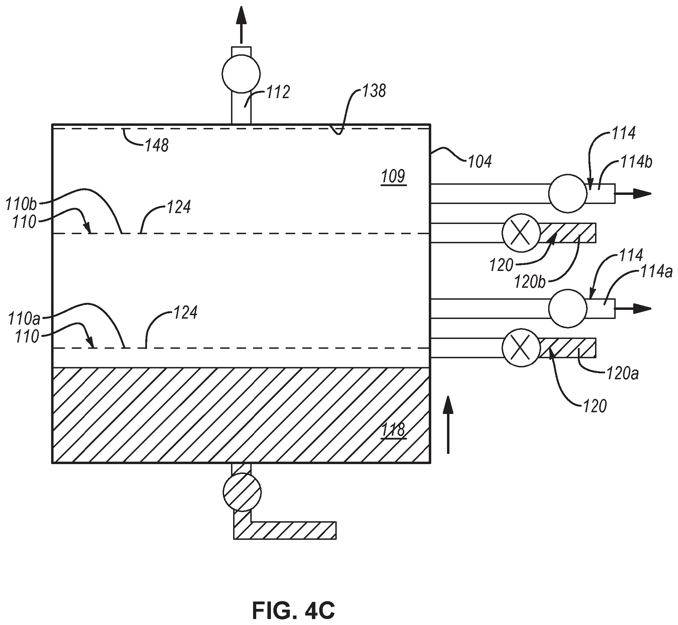

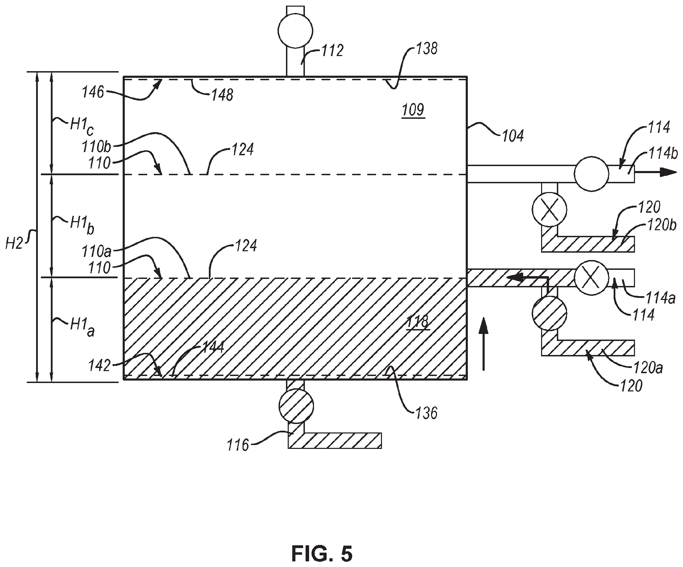

In some examples, as shown in Figure 4C, the secondary vacuum ports 114 may be located at a location above the corresponding inner distribution media layer 110, rather than aligned adjacent to the corresponding inner distribution media layer 110. This positioning ensures that the resin has completely filled a region below the corresponding inner distribution media layer 110 prior to opening the corresponding secondary resin inlet (see, i.e., Figure 5), thus preventing air from being trapped below the corresponding inner distribution media layer 110. In practice, the secondary resin inlet 120 is only opened after a sufficient amount of resin has exited a corresponding one of the secondary vacuum ports 114, ensuring that the lower sections of the mold 104 are adequately infused before progressing with the infusion process.

As shown generally in Figure 10 the method 300 includes (block 308) sequentially closing each one of the plurality of secondary vacuum ports 114 when a predetermined amount of the resin 118 enters into the corresponding one of the plurality of secondary vacuum ports 114. After a corresponding one of the plurality of secondary vacuum ports 114 is closed, the method 300 further includes (block 310) sequentially opening each one of a plurality of secondary resin inlets 120 to flow a second portion of resin 118 along an entirety of the corresponding one of the plurality of inner distribution media layers 110 to introduce the second portion of resin 118 from the corresponding infusion interface 124 into the mold 104, as specifically shown in Figures 5-7. Although shown with two inner distribution media layers 110, the mold 104 may include more than two inner distribution media layers 110, which may be determined based on a height of the final part. For molds 104 having more than two inner distribution media layers 110, the steps of sequentially closing the corresponding secondary vacuum port 114 and sequentially opening the corresponding secondary resin inlet 120 would continue until a topmost inner distribution media layer 110 is reached. The quantity of the plurality of inner distribution media layers 110 can be adjustable based on the desired infusion duration and/or infusion rate of the resin 118 through the mold 104. Additionally, the quantity can be adjusted to match the resin's stability at the infusion temperature, to ensure that the infusion process is optimized for different resin properties and processing conditions.

As shown in Figure 5, the resin 118 has filled the section of the mold 104 below the first inner distribution media layer 110a (i.e., first section of the mold) and a predetermined amount of the resin 118 has entered into the first secondary vacuum port 114a. Accordingly, the first secondary vacuum port 114a has been closed, and the first secondary resin inlet 120a is opened to introduce a second portion of resin 118 into the mold 104. The resin 118, which may be from the same resin source or a different resin source as the first portion of resin, is flowed along the entirety of the first inner distribution media layer 110a to introduce the resin 118 from the infusion interface 124 into the area above the first inner distribution media layer 110a (i.e., second section of the mold). In some examples, the resin 118 is pumped (i.e., actively pushed) through the first secondary resin inlet 120a and into the mold 104 via a pump (not shown), in addition to being actively pulled via the vacuum ports. Referring to the graph of Figure 3B, the infusion rate increases at the first predetermined height *H1ₐ*, after the second portion of the resin 118 is introduced from the infusion interface 124.

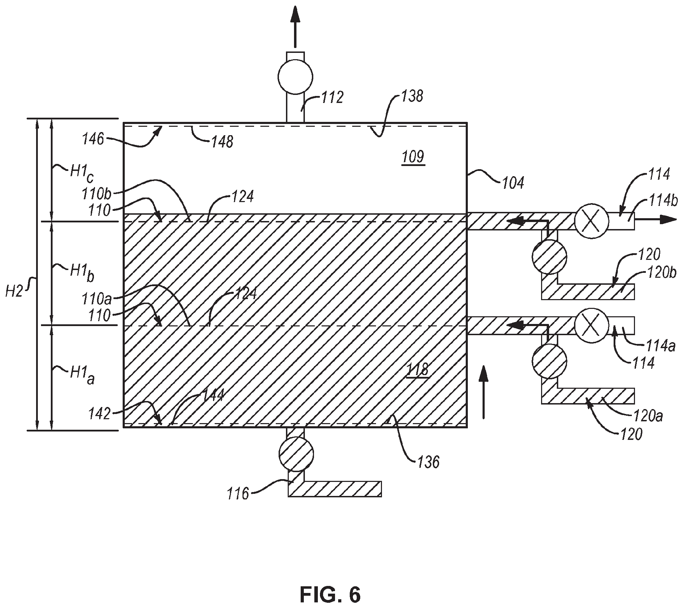

Referring to Figure 6, the resin 118 continues to fill the second section of the mold 104 until the resin 118 has filled the section of the mold 104 below the second inner distribution media layer 110b and a predetermined amount of the resin 118 has entered into the second secondary vacuum port 114b. Accordingly, the second secondary vacuum port 114b has been closed, and the second secondary resin inlet 120b is opened to introduce a third portion of resin 118 into the mold 104. The resin 118, which may be from the same resin source or a different resin source as the resin sources of the first portion and the second portion, is flowed along the entirety of the second inner distribution media layer 110b to introduce the resin 118 from the infusion interface 124 into the area above the second inner distribution media layer 110b (i.e., third section of the mold). Referring to the graph of Figure 3B, the infusion rate increases at the second predetermined height *H1_{b}*, after the third portion of the resin 118 is introduced from the infusion interface 124.

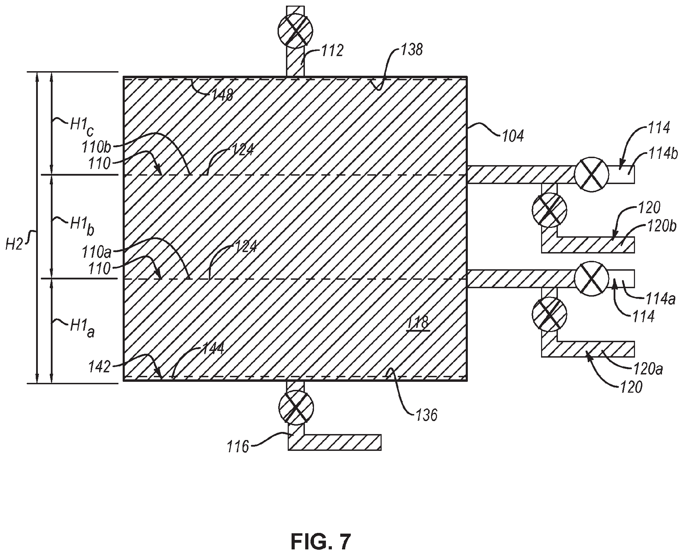

Referring to Figure 7, the resin 118 further continues to fill the third section of the mold 104 until the resin 118 has filled the entirety of the mold 104 and a predetermined amount of the resin 118 has entered into the primary vacuum port 112. Accordingly, the primary vacuum port 112 has been closed. Additionally, the primary resin inlet 116, and the secondary resin inlets 120 have also been closed to stop the flow of resin into the mold 104. The primary resin inlet 116 and all secondary resin inlets 120 can be closed at the same time, that is, at the end of the infusion process. In other words, once opened, all resin inlets are actively introducing resin into the mold 104 during the infusion process. In other examples, only one resin course is actively introducing resin into the mold 104, such that the primary resin inlet 116 is closed after the first secondary resin inlet 120a is opened, and the first secondary resin inlet 120a is closed after the second secondary resin inlet 120b is opened.

In some examples, the plurality of inner distribution media layers 110 of method 300 can be positioned within the mold 104 in either a uniform or non-uniform manner. When uniformly positioned, the inner distribution media layers 110 are spaced equidistantly within the mold 104. This means that the spacing between adjacent inner distribution media layers 110, the spacing between the bottom 136 of the mold 104 and the first inner distribution media layer 110a, and the spacing between the top 138 of the mold 104 and the topmost inner distribution media layer 110 is the same. This uniform positioning aids in consistent infusion rates between each inner distribution media layer 110. In other examples, the inner distribution media layers 110 may be non-uniformly positioned, such that at least one of the spacing between adjacent inner distribution media layers 110, the spacing between the bottom 136 of the mold 104 and the first inner distribution media layer 110a, and the spacing between the top 138 of the mold 104 and the topmost inner distribution media layer 110 is different. Non-uniform positioning may allow for tailored infusion rates between inner distribution media layers 110 to accommodate specific part requirements or to address variations in the mold's geometry.

As shown in Figure 8, according to some examples, is the molding tool 102 utilized for making the syntactic-foam part 100. The molding tool 102 includes the mold 104, the primary resin inlet 116, the primary vacuum port 112, the at least one secondary resin inlet 120, and the at least one secondary vacuum port 114. Although the vacuum ports and resin inlets are shown extending from a same side of the molding tool 102, the vacuum ports and resin inlets could be located at other locations on the molding tool 102, such as on opposite sides of the molding tool 102. In some examples, the molding tool 102 includes at least one transparent window 140. The transparent window 140 is usable to observe the level of the resin within the mold 104. In some examples, the closing a secondary vacuum port and/or opening of a secondary resin inlet may be based on observing when the level of the resin 118 is a predetermined level. For example, the predetermined level may be past the corresponding secondary vacuum port, to avoid trapping air below the corresponding inner distribution media layer 110.

In the above description, certain terms may be used such as "up," "down," "upper," "lower," "horizontal," "vertical," "left," "right," "over," "under" and the like. These terms are used, where applicable, to provide some clarity of description when dealing with relative relationships. But these terms are not intended to imply absolute relationships, positions, and/or orientations. For example, with respect to an object, an "upper" surface can become a "lower" surface simply by turning the object over. Nevertheless, it is still the same object. Further, the terms "including," "comprising," "having," and variations thereof mean "including but not limited to" unless expressly specified otherwise. An enumerated listing of items does not imply that any or all of the items are mutually exclusive and/or mutually inclusive, unless expressly specified otherwise. The terms "a," "an," and "the" also refer to "one or more" unless expressly specified otherwise. Further, the term "plurality" can be defined as "at least two." Moreover, unless otherwise noted, as defined herein a plurality of particular features does not necessarily mean every particular feature of an entire set or class of the particular features.

The term "about" or "substantially" in some examples, is defined to mean within +/-5% of a given value, however in additional examples any disclosure of "about" may be further narrowed and claimed to mean within +/- 4% of a given value, within +/- 3% of a given value, within +/- 2% of a given value, within +/- 1% of a given value, or the exact given value. Further, when at least two values of a variable are disclosed, such disclosure is specifically intended to include the range between the two values regardless of whether they are disclosed with respect to separate examples, and specifically intended to include the range of at least the smaller of the two values and/or no more than the larger of the two values. Additionally, when at least three values of a variable are disclosed, such disclosure is specifically intended to include the range between any two of the values regardless of whether they are disclosed with respect to separate examples, and specifically intended to include the range of at least the A value and/or no more than the B value, where A may be any of the disclosed values other than the largest disclosed value, and B may be any of the disclosed values other than the smallest disclosed value.

Additionally, instances in this specification where one element is "coupled" to another element can include direct and indirect coupling. Direct coupling can be defined as one element coupled to and in some contact with another element. Indirect coupling can be defined as coupling between two elements not in direct contact with each other but having one or more additional elements between the coupled elements. Further, as used herein, securing one element to another element can include direct securing and indirect securing. Additionally, as used herein, "adjacent" does not necessarily denote contact. For example, one element can be adjacent another element without being in contact with that element.

As used herein, the phrase "at least one of", when used with a list of items, means different combinations of one or more of the listed items may be used and only one of the items in the list may be needed. The item may be a particular object, thing, or category. In other words, "at least one of" means any combination of items or number of items may be used from the list, but not all of the items in the list may be required. For example, "at least one of item A, item B, and item C" may mean item A; item A and item B; item B; item A, item B, and item C; or item B and item C. In some cases, "at least one of item A, item B, and item C" may mean, for example, without limitation, two of item A, one of item B, and ten of item C; four of item B and seven of item C; or some other suitable combination.

Unless otherwise indicated, the terms "first," "second," etc. are used herein merely as labels, and are not intended to impose ordinal, positional, or hierarchical requirements on the items to which these terms refer. Moreover, reference to, e.g., a "second" item does not require or preclude the existence of, e.g., a "first" or lower-numbered item, and/or, e.g., a "third" or higher-numbered item.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware which enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The schematic flow chart diagrams included herein are generally set forth as logical flow chart diagrams. As such, the depicted order and labeled steps are indicative of one example of the presented method. Other steps and methods may be conceived that are equivalent in function, logic, or effect to one or more steps, or portions thereof, of the illustrated method. Additionally, the format and symbols employed are provided to explain the logical steps of the method and are understood not to limit the scope of the method. Although various arrow types and line types may be employed in the flow chart diagrams, they are understood not to limit the scope of the corresponding method. Indeed, some arrows or other connectors may be used to indicate only the logical flow of the method. For instance, an arrow may indicate a waiting or monitoring period of unspecified duration between enumerated steps of the depicted method. Additionally, the order in which a particular method occurs may or may not strictly adhere to the order of the corresponding steps shown.

The present subject matter may be embodied in other specific forms without departing from its essential characteristics. The described examples are to be considered in all respects only as illustrative and not restrictive. All changes which come within the meaning and range of the claims are to be embraced within their scope.

The following present further examples:
Example 1. A method (200) of making a syntactic-foam part (100), the method (200) comprising:
   loading (202) a first set of low-density spheres (126) into a mold (104) to fill a first section (106) of the mold (104);
   positioning (204) an inner distribution media layer (110) over the first set of low-density spheres (126) in the first section (106) of the mold (104), wherein the inner distribution media layer (110) defines an infusion interface (124) within the mold (104);
   loading (206) a second set of low-density spheres (126) into the mold (104) to fill a second section (108) of the mold (104);
   applying (208) vacuum to the mold (104) by opening a primary vacuum port (112);
   introducing (210) a first portion of resin (118) from a primary resin inlet (116) into the first section (106) of the mold (104);
   after the first portion of resin (118) reaches a predetermined level, opening (212) a secondary resin inlet (120) to flow a second portion of resin (118) along an entirety of the inner distribution media layer (110) to introduce the second portion of resin (118) from the infusion interface (124) into the second section (108) of the mold (104); and
   after a predetermined amount of the second portion of resin (118) enters into the primary vacuum port (112), closing (214) the primary vacuum port (112).
Example 2. The method (200) according to Example 1, wherein:
   the step of applying vacuum to the mold (104) further comprises applying vacuum to the mold (104) by opening a secondary vacuum port (114), wherein the secondary vacuum port (114) is positioned between the primary vacuum port (112) and the primary resin inlet (116) and is adjacent to the inner distribution media layer (110); and
   prior to opening the secondary resin inlet (120), closing the secondary vacuum port (114).
Example 3. The method (200) according to Example 1 or Example 2, further comprising, after introducing the first portion of resin (118) and the second portion of resin (118) into the mold (104), solidifying the first portion of resin (118) and the second portion of resin (118).
Example 4. The method (200) according to any preceding Example, further comprising, prior to loading the low-density spheres (126) into the first section (106) of the mold (104), positioning a lower distribution media layer (142) at a bottom (136) of the mold (104), wherein the lower distribution media layer (142) defines a lower infusion interface (144) and the inner distribution media layer (110) is above the lower distribution media layer (142).
Example 5. The method (200) according to any preceding Example, further comprising, after loading the second set of low-density spheres (126) into the second section (108) of the mold (104), positioning an upper distribution media layer (146) over the second set of low-density spheres (126) in the second section (108) of the mold (104), wherein the upper distribution media layer (146) defines an upper infusion interface (148) and the inner distribution media layer (110) is below the upper distribution media layer (146).
Example 6. The method (200) according to any preceding Example, wherein the inner distribution media layer (110) inhibits movement of low-density spheres (126) through the inner distribution media layer (110).
Example 7. The method (200) according to any preceding Example, wherein the first portion of resin (118) is introduced at a bottom (136) of the mold (104) and fills the mold (104) in a bottom-to-top or generally bottom-to-top direction.
Example 8. The method (200) according to any preceding Example, wherein:
   each one of the first set of low-density spheres (126) in the first section (106) of the mold (104) and the second set of low-density spheres (126) in the second section (108) of the mold (104) has a first flow resistance;
   the inner distribution media layer (110) has a second flow resistance; and
   the first flow resistance is greater than the second flow resistance.
Example 9. The method (200) according to any preceding Example when dependent on Example 2, wherein applying vacuum to the mold (104), by opening the secondary vacuum port (114), further comprises applying vacuum to the mold (104) from multiple secondary vacuum ports (114) each positioned adjacent to the inner distribution media layer (110) at spaced apart locations about the mold (104), such that each one of the multiple secondary vacuum ports (114) are positioned adjacent to the inner distribution media layer (110).
Example 10. The method (200) according to any preceding Example, further comprising actively pushing the first portion of resin (118), from a bottom (136) of the mold (104), to urge the first portion of resin (118) to flow in a bottom-to-top or generally bottom-to-top direction through the mold (104).
Example 11. The method (200) according to any preceding Example, wherein:
   the inner distribution media layer (110) comprises at least one lower-resistance flow region (151);
   regions of the inner distribution media layer (110) other than the at least one lower-resistance flow region (151) comprises a higher-resistance flow region (153);
   the at least one lower-resistance flow region (151) has a lower resistance to a flow of resin compared to the higher-resistance flow region (153), such that the second portion of resin flows faster through the at least one lower-resistance flow region (151); and
   opening the secondary resin inlet (120), to flow the second portion of resin (118) along the entirety of the inner distribution media layer (110), comprises flowing the second portion of resin (118) within the at least one lower-resistance flow region (151) and filling in the higher-resistance flow region (153) from the at least one lower-resistance flow region (151).
Example 12. A syntactic-foam part (100), comprising:
   low-density spheres (126);
   at least one inner distribution media layer (110) positioned within the low-density spheres (126) at a predetermined height (H1) and defining an infusion interface (124); and
   a resin (118) encapsulating the low-density spheres (126) and the at least one inner distribution media layer (110); and optionally,
   wherein the at least one inner distribution media layer (110) is configured to facilitate flow of the resin (118) along an entirety of the at least one inner distribution media layer (110) to introduce the resin (118) from the at least one inner distribution media layer (110), thus resetting a resin level at the infusion interface (124) during an infusion process.
Example 13. The syntactic-foam part (100) according to Example 12, wherein:
   the low-density spheres (126), encapsulated in the resin (118), have a first density;
   the at least one inner distribution media layer (110), encapsulated in the resin (118), has a second density; and
   the second density is greater than the first density.
Example 14. The syntactic-foam part (100) according to Example 12 or Example 13, wherein the at least one inner distribution media layer (110) comprises multiple sub-layers (113), and wherein each one of the multiple sub-layers (113) is configured to perform at least one of inhibiting movement of low-density spheres through the at least one inner distribution media layer, allowing resin to flow through the inner distribution media layer, conducting heat, and conducting electrical current.
Example 15. The syntactic-foam part (100) according to any of Examples 12 - 14, wherein the at least one inner distribution media layer (110) is made of a fibrous material.
Example 16. The syntactic-foam part (100) according to any of Examples 12 - 15, wherein:
   the at least one inner distribution media layer (110) comprises at least one lower-resistance flow region (151);
   regions of the least one inner distribution media layer (110) other than the at least one lower-resistance flow region (151) comprise a higher-resistance flow region (153); and
   the at least one lower-resistance flow region (151) has a lower resistance to a flow of the resin (118) compared to the higher-resistance flow region (153), such that the resin (118) flows faster through the at least one lower-resistance flow region (151).
Example 17. A method (300) of making a syntactic-foam part (100), the method (300) comprising:
   loading (302) low-density spheres (126) and a plurality of inner distribution media layers (110) into a mold (104), wherein each one of the plurality of inner distribution media layers (110) is positioned at a predetermined height (H1) and defines an infusion interface (124) within the mold (104);
   applying (304) vacuum to the mold (104) by opening a primary vacuum port (112) and a plurality of secondary vacuum ports (114), wherein each one of the plurality of secondary vacuum ports (114) is between the primary vacuum port (112) and a primary resin inlet (116) and is positioned adjacent to one of the plurality of inner distribution media layers (110);
   introducing (306) resin (118) into the mold (104) from the primary resin inlet (116);
   sequentially closing (308) each one of the plurality of secondary vacuum ports (114) when a predetermined amount of the resin (118) reaches a predetermined level; and
   after a corresponding one of the plurality of secondary vacuum ports (114) is closed, sequentially opening (310) each one of a plurality of secondary resin inlets (120) to flow a second portion of resin (118) along an entirety of the corresponding one of the plurality of inner distribution media layers (110) to introduce the second portion of resin (118) from the corresponding infusion interface (124) into the mold (104).
Example 18. The method (300) according to Example 17, wherein the predetermined height (H1) of each one of the plurality of inner distribution media layers (110) is uniformly positioned within the mold (104), such that a spacing between adjacent ones of the plurality of inner distribution media layers (110), a spacing between a bottom (136) of the mold (104) and a first inner distribution media layer (110a), and a spacing between a top (138) of the mold (104) and a topmost inner distribution media layer (110b) are the same.
Example 19. The method (300) according to any of Examples 17 - 18, wherein the predetermined height (H1) of each one of the plurality of inner distribution media layers (110) is non-uniformly positioned within the mold (104), such that at least one of a spacing between adjacent ones of the plurality of inner distribution media layers (110), a spacing between a bottom (136) of the mold (104) and a first inner distribution media layer (110a), and a spacing between a top (138) of the mold (104) and a topmost inner distribution media layer (110b) is different.
Example 20. The method (300) according to any of Examples 17 - 19, further comprising observing a level of the resin (118) through at least one transparent window (140) in the mold (104), wherein sequentially closing each one of the plurality of secondary vacuum ports (114) further comprises sequentially closing each one of the plurality of secondary vacuum ports (114) when the predetermined level of the resin (118) is observed to be reached.
Example 21. The method (300) according to any of Examples 17 - 20, wherein a quantity of the plurality of inner distribution media layers (110) is adjustable based on a desired infusion duration of the resin (118) through the mold (104).
Example 22. The method (300) of any of Examples 17 - 21, wherein the plurality of inner distribution media layers (110) are configured to facilitate flow of the resin (118) along an entirety of each of the plurality of inner distribution media layers (110) to introduce the resin (118) from the plurality of inner distribution media layers (110), thus resetting a resin level at each infusion interface (124) during an infusion process.
Example 23. The method (300) of any of Examples 17 - 22, wherein each of the plurality of inner distribution media layers (110) comprise multiple sub-layers (113), and each one of the multiple sub-layers (113) is configured to perform at least one of inhibiting movement of low-density spheres through each of the plurality of inner distribution media layers (110), allowing resin to flow through each of the plurality of inner distribution media layers (110), conducting heat, and conducting electrical current.
Example 24. The method (300) of any of Examples 17 - 23, wherein:
   each of the plurality of inner distribution media layers (110) comprises at least one lower-resistance flow region (151);
   regions of the inner distribution media layer (110) other than the at least one lower-resistance flow region (151) comprise a higher-resistance flow region (153); and
   the at least one lower-resistance flow region (151) has a lower resistance to a flow of the resin (118) compared to the higher-resistance flow region (153), such that the resin (118) flows faster through the at least one lower-resistance flow region (151).

The present application discloses subject matter in accordance with the following numbered clauses:
Clause 1. A method (200) of making a syntactic-foam part (100), the method (200) comprising:
   loading (202) a first set of low-density spheres (126) into a mold (104) to fill a first section (106) of the mold (104); positioning (204) an inner distribution media layer (110) over the first set of low-density spheres (126) in the first section (106) of the mold (104), wherein the inner distribution media layer (110) defines an infusion interface (124) within the mold (104); loading (206) a second set of low-density spheres (126) into the mold (104) to fill a second section (108) of the mold (104); applying (208) vacuum to the mold (104) by opening a primary vacuum port (112); introducing (210) a first portion of resin (118) from a primary resin inlet (116) into the first section (106) of the mold (104); after the first portion of resin (118) reaches a predetermined level, opening (212) a secondary resin inlet (120) to flow a second portion of resin (118) along an entirety of the inner distribution media layer (110) to introduce the second portion of resin (118) from the infusion interface (124) into the second section (108) of the mold (104); and after a predetermined amount of the second portion of resin (118) enters into the primary vacuum port (112), closing (214) the primary vacuum port (112).
Clause 2. The method (200) according to clause 1, wherein: the step of applying vacuum to the mold (104) further comprises applying vacuum to the mold (104) by opening a secondary vacuum port (114), wherein the secondary vacuum port (114) is positioned between the primary vacuum port (112) and the primary resin inlet (116) and is adjacent to the inner distribution media layer (110); and prior to opening the secondary resin inlet (120), closing the secondary vacuum port (114); and optionally; wherein applying vacuum to the mold (104), by opening the secondary vacuum port (114), further comprises applying vacuum to the mold (104) from multiple secondary vacuum ports (114) each positioned adjacent to the inner distribution media layer (110) at spaced apart locations about the mold (104), such that each one of the multiple secondary vacuum ports (114) are positioned adjacent to the inner distribution media layer (110).
Clause 3. The method (200) according to clause 1 or clause 2, further comprising, after introducing the first portion of resin (118) and the second portion of resin (118) into the mold (104), solidifying the first portion of resin (118) and the second portion of resin (118).
Clause 4. The method (200) according to any preceding clause, further comprising one or more of: prior to loading the low-density spheres (126) into the first section (106) of the mold (104), positioning a lower distribution media layer (142) at a bottom (136) of the mold (104), wherein the lower distribution media layer (142) defines a lower infusion interface (144) and the inner distribution media layer (110) is above the lower distribution media layer (142); and after loading the second set of low-density spheres (126) into the second section (108) of the mold (104), positioning an upper distribution media layer (146) over the second set of low-density spheres (126) in the second section (108) of the mold (104), wherein the upper distribution media layer (146) defines an upper infusion interface (148) and the inner distribution media layer (110) is below the upper distribution media layer (146).
Clause 5. The method (200) according to any preceding clause, wherein the inner distribution media layer (110) inhibits movement of low-density spheres (126) through the inner distribution media layer (110).
Clause 6. The method (200) according to any preceding clause, wherein one or more of: the first portion of resin (118) is introduced at a bottom (136) of the mold (104) and fills the mold (104) in a bottom-to-top or generally bottom-to-top direction; and the method further comprises actively pushing the first portion of resin (118), from a bottom (136) of the mold (104), to urge the first portion of resin (118) to flow in a bottom-to-top or generally bottom-to-top direction through the mold (104).
Clause 7. The method (200) according to any preceding clause, wherein: each one of the first set of low-density spheres (126) in the first section (106) of the mold (104) and the second set of low-density spheres (126) in the second section (108) of the mold (104) has a first flow resistance; the inner distribution media layer (110) has a second flow resistance; and the first flow resistance is greater than the second flow resistance.
Clause 8. The method (200) according to any preceding clause, wherein: the inner distribution media layer (110) comprises at least one lower-resistance flow region (151); regions of the inner distribution media layer (110) other than the at least one lower-resistance flow region (151) comprises a higher-resistance flow region (153); the at least one lower-resistance flow region (151) has a lower resistance to a flow of resin compared to the higher-resistance flow region (153), such that the second portion of resin flows faster through the at least one lower-resistance flow region (151); and opening the secondary resin inlet (120), to flow the second portion of resin (118) along the entirety of the inner distribution media layer (110), comprises flowing the second portion of resin (118) within the at least one lower-resistance flow region (151) and filling in the higher-resistance flow region (153) from the at least one lower-resistance flow region (151).
Clause 9. The method (200) of any preceding clause, wherein one or more of: the inner distribution media layer (110) is configured to facilitate flow of the resin (118) along an entirety of the inner distribution media layer (110) to introduce the resin (118) from the inner distribution media layer (110), thus resetting a resin level at the infusion interface (124) during an infusion process; and the inner distribution media layer (110) comprises multiple sub-layers (113), and each one of the multiple sub-layers (113) is configured to perform at least one of inhibiting movement of low-density spheres through the inner distribution media layer, allowing resin to flow through the inner distribution media layer, conducting heat, and conducting electrical current.
Clause 10. A syntactic-foam part (100), comprising: low-density spheres (126); at least one inner distribution media layer (110) positioned within the low-density spheres (126) at a predetermined height (H1) and defining an infusion interface (124); and a resin (118) encapsulating the low-density spheres (126) and the at least one inner distribution media layer (110).
Clause 11. The syntactic-foam part (100) according to clause 10, wherein one or more of: the low-density spheres (126), encapsulated in the resin (118), have a first density, the at least one inner distribution media layer (110), encapsulated in the resin (118), has a second density, and the second density is greater than the first density; and the at least one inner distribution media layer (110) is made of a fibrous material.
Clause 12. A method (300) of making a syntactic-foam part (100), the method (300) comprising: loading (302) low-density spheres (126) and a plurality of inner distribution media layers (110) into a mold (104), wherein each one of the plurality of inner distribution media layers (110) is positioned at a predetermined height (H1) and defines an infusion interface (124) within the mold (104); applying (304) vacuum to the mold (104) by opening a primary vacuum port (112) and a plurality of secondary vacuum ports (114), wherein each one of the plurality of secondary vacuum ports (114) is between the primary vacuum port (112) and a primary resin inlet (116) and is positioned adjacent to one of the plurality of inner distribution media layers (110); introducing (306) resin (118) into the mold (104) from the primary resin inlet (116); sequentially closing (308) each one of the plurality of secondary vacuum ports (114) when a predetermined amount of the resin (118) reaches a predetermined level; and after a corresponding one of the plurality of secondary vacuum ports (114) is closed, sequentially opening (310) each one of a plurality of secondary resin inlets (120) to flow a second portion of resin (118) along an entirety of the corresponding one of the plurality of inner distribution media layers (110) to introduce the second portion of resin (118) from the corresponding infusion interface (124) into the mold (104).
Clause 13. The method (300) according to clause 12, wherein one of: the predetermined height (H1) of each one of the plurality of inner distribution media layers (110) is uniformly positioned within the mold (104), such that a spacing between adjacent ones of the plurality of inner distribution media layers (110), a spacing between a bottom (136) of the mold (104) and a first inner distribution media layer (110a), and a spacing between a top (138) of the mold (104) and a topmost inner distribution media layer (110b) are the same; or the predetermined height (H1) of each one of the plurality of inner distribution media layers (110) is non-uniformly positioned within the mold (104), such that at least one of a spacing between adjacent ones of the plurality of inner distribution media layers (110), a spacing between a bottom (136) of the mold (104) and a first inner distribution media layer (110a), and a spacing between a top (138) of the mold (104) and a topmost inner distribution media layer (110b) is different.
Clause 14. The method (300) according to clause 12 or clause 13, wherein one or more of: the method further comprises observing a level of the resin (118) through at least one transparent window (140) in the mold (104), wherein sequentially closing each one of the plurality of secondary vacuum ports (114) further comprises sequentially closing each one of the plurality of secondary vacuum ports (114) when the predetermined level of the resin (118) is observed to be reached; and a quantity of the plurality of inner distribution media layers (110) is adjustable based on a desired infusion duration of the resin (118) through the mold (104).
Clause 15. The method (200, 300) of any of clauses 1 - 9 or clauses 12 - 14, or the syntactic-foam part (100) of clauses 10 - 11, wherein a low-density sphere (126) has a density of between, and inclusive of, 0.005 g/cm³ and 0.6 g/cm³.

## Claims

1. A syntactic-foam part (100), comprising:
low-density spheres (126);
at least one inner distribution media layer (110) positioned within the low-density spheres (126) at a predetermined height (H1) and defining an infusion interface (124); and
a resin (118) encapsulating the low-density spheres (126) and the at least one inner distribution media layer (110), wherein:
the at least one inner distribution media layer (110) comprises at least one lower-resistance flow region (151);
regions of the least one inner distribution media layer (110) other than the at least one lower-resistance flow region (151) comprise a higher-resistance flow region (153); and
the at least one lower-resistance flow region (151) has a lower resistance to a flow of the resin (118) compared to the higher-resistance flow region (153), such that the resin (118) flows faster through the at least one lower-resistance flow region (151).

2. The syntactic-foam part (100) according to claim 1, wherein the low-density spheres (126), encapsulated in the resin (118), have a first density, the at least one inner distribution media layer (110), encapsulated in the resin (118), has a second density, and the second density is greater than the first density.

3. The syntactic-foam part (100) according to claim 1 or claim 2, wherein the at least one inner distribution media layer (110) is made of a fibrous material.

4. The syntactic-foam part (100) according to claim 1 or claim 2, wherein the at least one inner distribution media layer (110) is comprised of a non-fibrous material.

5. The syntactic-foam part (100) according to claim 4, wherein one or more off:
the material of the at least one inner distribution media layer (110) is a thermally conductive material, such as metal foils or thermally conductive fiber; and/or
the material of the at least one inner distribution media layer (110) is electrically conductive, such as conductive fibers or coatings.

6. The syntactic-foam part (100) according to claim 4 or claim 5, wherein the at least one inner distribution media layer (110) comprises a series of holes or perforations throughout the layer, the holes or perforations configured to allow the resin (118) to pass through the holes or perforations during an infusion process.

7. The syntactic-foam part (100) according to claim 6, wherein the at least one inner distribution media layer (110) is a perforated metal sheet or foil.

8. The syntactic-foam part (100) according to any preceding claim, wherein the at least one lower-resistance flow region (151) may include channels, perforations, or an area with a different material composition that provides lower resistance to resin flow.

9. The syntactic-foam part (100) according to any preceding claim, wherein the at least one lower-resistance flow region (151) is located around a perimeter or throughout the at least one inner distribution media layer (110), and optionally,
wherein the at least one inner distribution media layer (110) includes a flow path portion (150), which is a lower-resistance flow region (151) surrounding a perimeter (152) of the inner distribution media layer (110), and a central portion (154), interior of the flow path portion (150), which is a higher-resistance flow region (153).

10. The syntactic-foam part (100) according to any preceding claim, wherein the at least one inner distribution media layer (110) comprises multiple sub-layers (113), and wherein each one of the multiple sub-layers (113) is configured to perform at least one of inhibiting movement of low-density spheres through the at least one inner distribution media layer, allowing resin to flow through the inner distribution media layer, conducting heat, and conducting electrical current.

11. The syntactic-foam part (100) according to any preceding claim, wherein the at least one inner distribution media layer (110) comprises pores sized to block the low-density spheres (126) from penetration.

12. The syntactic-foam part (100) according to any preceding claim, wherein the at least one inner distribution media layer (110) comprises a plurality of inner distribution media layers (110), and wherein one of:
the spacing between adjacent inner distribution media layers (110) is the same; or
at least one spacing between adjacent inner distribution media layers (110) is different.

13. The syntactic-foam part (100) according to any preceding claim, wherein the at least one inner distribution media layer (110) is configured to facilitate flow of the resin (118) along an entirety of the at least one inner distribution media layer (110) to introduce
the resin (118) from the at least one inner distribution media layer (110), thus resetting a resin level at the infusion interface (124) during an infusion process.

14. The syntactic-foam part (100) according to any preceding claim, wherein:
each one of a first section of low-density spheres (126) and a second section of low-density spheres (126) has a first flow resistance;
the first section of low-density spheres (126) and the second section of low-density spheres (126) are separated by the at least one inner distribution media layer (110);
the at least inner distribution media layer (110) has a second flow resistance; and
the first flow resistance is greater than the second flow resistance.

15. The syntactic-foam part (100) according to any preceding claim, wherein a low-density sphere (126) has a density of between, and inclusive of, 0.005 g/cm³ and 0.6 g/cm³.
